# EUROPEAN PATENT SPECIFICATION

(11) **EP 1 692 846 B1**
(45) Date of publication and mention of the grant of the patent: **06.05.2009**
(21) Application number: 03819053.4
(22) Date of filing: 21.11.2003
(51) Int. Cl.: H04M 1/02, H04B 1/38

(54) **TWO STEP ACTIVATION OF PHONE**
ZWEISCHRITT-AKTIVIERUNG EINES TELEFONS
ACTIVATION D'UN TELEPHONE EN DEUX ETAPES

(43) Date of publication of application: 23.08.2006
(73) Proprietor: Nokia Corporation, 02150 Espoo (FI)
(72) Inventor: NAVNTOFT, Jacob, DK-3000 Helsingoer (DK)
(74) Representative: Milanov, Nina Vendela Maria
(86) International application number: PCT/IB2003/005315
(87) International publication number: WO 2005/053287

(56) References cited:
- EP-A2- 1 353 488
- WO-A1-99/55060
- WO-A1-03/044974
- US-A1- 2002 173 281
- US-B1- 6 177 950

## Description

### Field of the invention

The present invention relates to a communication apparatus, and a method for operating a communication apparatus.

### Background of the invention

Hand held communication devices appear in a variety of shapes and form factors. Next to pleasant appearance, user ergonomics are among the most important external factors designers consider in designing such products. One aesthetically pleasing form factor uses an extendible section, such as a flip or a clamshell cover. One of the objectives met by these extendible sections is protection of the user interfaces, such as the keypad and the display. Another is the spatial extension of the communication device in the operating mode to provide sufficient length to cover the distance between the ear and mouth of the user. These extendible sections have also been used to respond to an incoming call. When used as such an incoming call may be answered simply by opening the cover, and the user does not need to press an answer button to receive the call. A problem with these covers is that operation of the product is greatly hampered when the cover is in the closed mode as neither the keypad nor the display are accessible. To overcome this, some devices have an extra display, which makes the device more expensive. Further, the extra display will still be exposed to mechanical wear when the communication device is folded up. US 6,215,474 discloses a device with a cover which includes a see-through section covering at least a part of the display section when the device is folded up, and through access keys which provides access to the keypad when the cover folded up. This approach also makes the device more expensive, and further limit the freedom of product design.

WO 00/51317 discloses a mobile phone with a movable cover allowing a user to preview caller ID information on a display that is normally concealed by the cover. The user can open the cover to a preview position without accepting the call and then to a fully open position to accept the call after the caller ID information has been previewed, or the phone delays accepting the incoming call after the cover is opened to give the user time to preview the caller ID information and decide whether to answer the call.

Accordingly, a need exists for a device that overcomes the deficiencies of the prior art.

### Summary of the invention

An object of the present invention is to provide a user-friendly communication apparatus.

The above object together with numerous other objects, which will become evident from the detailed description below, are obtained according to a first aspect of the present invention by a communication apparatus having a first housing member, a second housing member pivotally coupled to the first housing member, a controller operable in a plurality of operation states, and a detector associated with said first and second housing members, and connected to the controller. The detector is adapted to detect an angle position related to the first and second housing members and supply an angle position detection signal to the controller, and the controller is adapted to enter a first operating state when the angle position detection signal represents an angle position within a first interval, a second operating state when the angle position detection signal represents an angle position within a second interval, and a third operating state when the angle position detection signal represents an angle position within a third interval.

The controller is further adapted to control reception of an incoming call by rejecting the incoming call upon a transition from the second state to the first state, or accepting the incoming call upon a transition from the second state to the third state. The apparatus according to the invention is characterised by the first operating state being entered where said angle position is less than a first threshold angle position, the second operating state being entered where said angle position is more than a second angle threshold position or less than a third angle threshold position, and the third operating state being entered where said angle position is more than a fourth angle threshold position, and wherein said first angle threshold position threshold represents a smaller angle than said second angle threshold position, and said third angle threshold position represents a smaller angle than said fourth angle threshold position.

The terms "first", "second" and "third" should in this context entirely be construed as terms for differentiating between elements and not be construed as a timing consideration.

The detector may comprise a means provided with one or more cams and one or more electromechanical switches, said cams being adapted to actuate said one or more electromechanical switches to generate said angle position detection signal directly representing said angle position interval.

The controller may be adapted to accept an incoming call upon a transition from the second state to the third state. The controller may further be adapted to accept an incoming call upon the transition from the second state to the third state after a transition from the first state to the second state. The first state may be a state in which the first and second housing members are essentially folded up. The detector may comprise a hall sensor and/or an electromechanical switch. The controller may be adapted to reject an incoming call upon transition from the second state to the first state.

The above object, together with numerous other objects, which will become evident from the detailed description below, are obtained according to a second aspect of the present invention by a method for operating a communication apparatus having a first housing member and a second housing member pivotally coupled to the first housing member. The method comprises detecting an angle position related to the first and second housing members, and entering a first, second and third state of the communication apparatus related to a first, second, and third interval of the angle position respectively.

The method further comprises receiving a phone call, comprising unfolding the communication apparatus from the first state to the second state, displaying caller information, and rejecting the phone call by folding the communication apparatus to the first state, or accepting the phone call by further unfolding the communication apparatus to the third state. The method is characterised by the entering of the first operating state when said angle position is less than a first threshold angle position, the entering of the second operating state when said angle position is more than a second angle position or less than a third angle threshold position, and the entering of the third operating state when said angle position is more than a fourth angle threshold position, and wherein said first angle threshold position threshold represents a smaller angle than said second angle threshold position, and said third angle threshold position represents a smaller angle than said fourth angle threshold position.

The detection may further comprise actuating an electromechanical switch by a cam and generating an angle position signal by the electromechanical switch. The method may comprise accepting an incoming call upon transition from the second state to the third state. The method may further comprise accepting an incoming call upon the transition from the second state to the third state after a transition from the first state to the second state. The method may comprise activating a display upon transition from the first state to the second state, scanning of a touch screen when said communication apparatus is in the third state, activating presentation of information of a new message on a display upon transition from said first state to said second state, and/or deactivating a display upon transition from said second state to said first state. The method may further comprise activating presentation of the message upon transition from the second state to the third state. The method may comprise activating presentation of information of an incoming call on a display upon transition from the first state to the second state. The method may comprise rejecting an incoming call upon transition from the second state to the first state.

A technical effect of the present invention relates to detection of an angle position between two housing members of the communication apparatus, wherein states of the communication apparatus depend on the angle position, which states may be used for controlling the communication apparatus.

A particular advantage of the present invention is operation of the communication apparatus in frequently used functions without having to access a keyboard.

Another advantage of the present invention is minimizing the risk of unintentional hang up due to slipping when unfolding the communication apparatus.

### Brief description of the drawings

The above, as well as additional objects, features and advantages of the present invention, will be better understood through the following illustrative and nonlimiting detailed description of preferred embodiments of the present invention, with reference to the appended drawings, wherein:
Fig. 1 shows a block diagram of a telephone according to the present invention;
Figs 2a to 2f show a communication apparatus having different angle positions related to first and second housing members;
Fig. 3 shows an angle position diagram in relation to a communication apparatus, angle position thresholds, and angle position intervals according to an embodiment of the present invention;
Fig. 4 shows an angle position diagram in relation to a communication apparatus, angle position thresholds, and angle position intervals according to further an embodiment of the present invention;
Figs 5a and 5b show a communication apparatus according to a second embodiment having different angle positions related to first and second housing members;
Figs 6a and 6b show a communication apparatus according to a third embodiment having different angle positions related to first and second housing members;
Fig. 7 is a flow chart showing a method for operating a communication apparatus;
Fig. 8 is a state transition diagram according to an embodiment of the present invention;
Fig. 9 is a state transition diagram according to further an embodiment of the present invention; and
Fig. 10 is a flow chart showing one embodiment of a method for operating a communication apparatus.

### Detailed description of preferred embodiments

In the following description of the various embodiments, reference is made to the accompanying drawings which form a part hereof, and in which is shown by way of illustration various embodiments in which the invention may be practiced. It is to be understood that other embodiments may be made without departing from the scope of the present invention.

The same reference numbers have been used for the same or similar objects, where applicable, in the accompanying drawings.

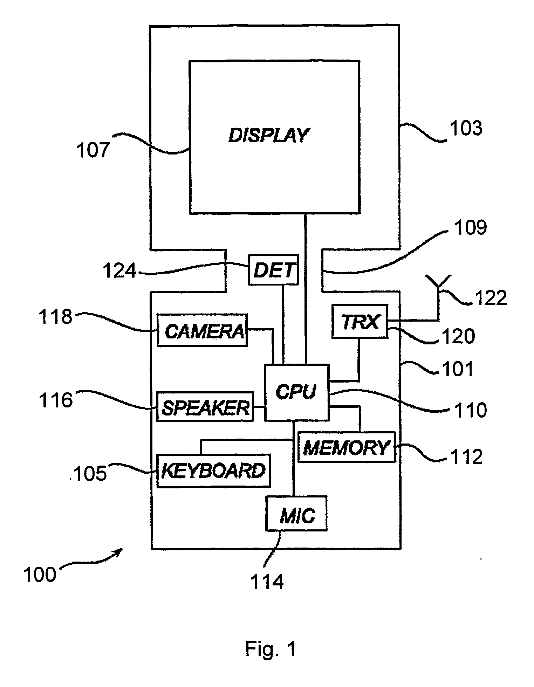

Figure 1 shows a block diagram of a telephone 100 according to the present invention. A first housing member 101 comprises a processing unit 110 connected to an antenna 122 via a transceiver 120, a memory unit 112, a microphone 114, a keyboard 105, a speaker 116 and a camera 118. The processing unit 110 is also connected to a display 107, which is comprised in a second housing member 103 of the telephone 100.

Alternatively, the display 107 is comprised in the first housing member 101, and the second housing member 103 is only a protective cover. Yet alternatively, a memory unit 112, a microphone 114, a keyboard 105, a speaker 116 or a camera 118, or any combination thereof, is comprised in the second housing member 103.

No detailed description will be presented regarding the specific functions of the different blocks of the telephone 100. In short, however, as the person skilled in the art will realize, the processing unit 110 controls the overall function of the functional blocks in that it is capable of receiving input from the keyboard 105, audio information via the microphone 114, images via the camera 118 and receive suitably encoded and modulated data via the antenna 122 and transceiver 120. The processing unit 110 is also capable of providing output in the form of sound via the speaker 116, images via the display 107 and suitably encoded and modulated data via the transceiver 120 and antenna 122.

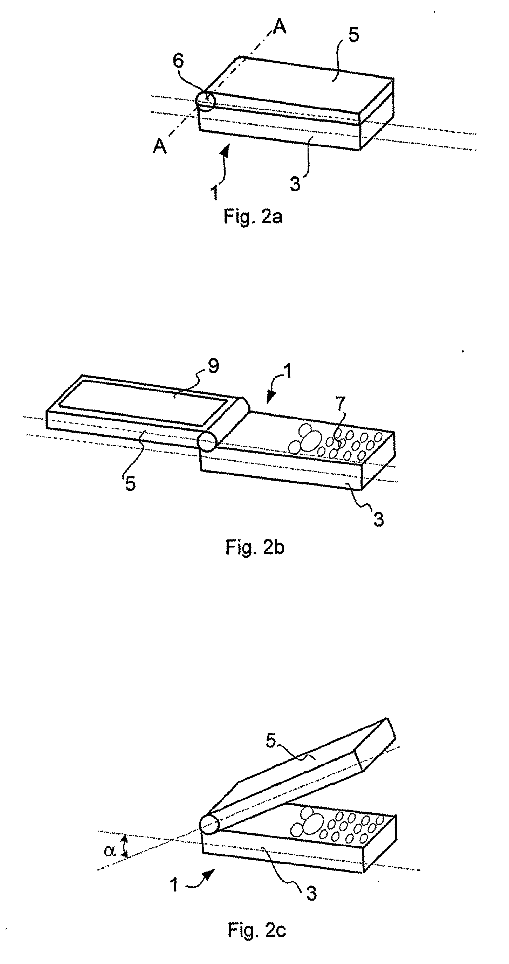

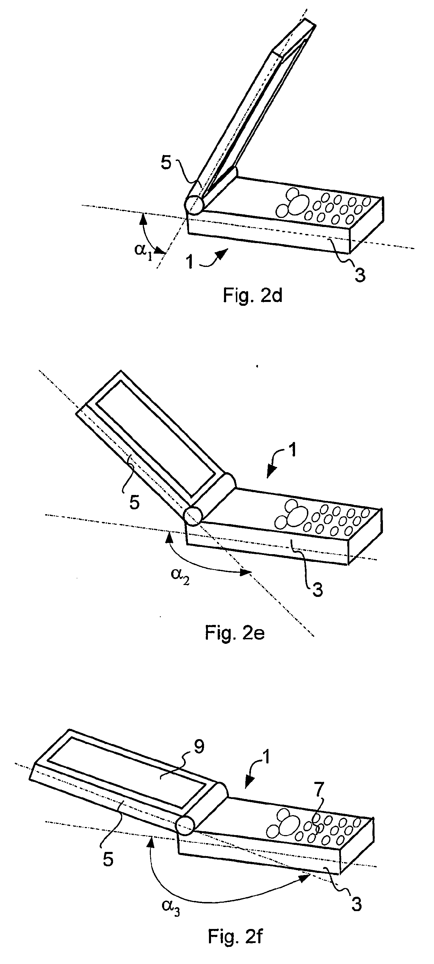

The second housing member 103 is mechanically connected to the first housing member 101 via a tilt hinge 109. The display 107 is electrically connected to the processing unit 110 via electric connection means (not shown in figure 1). The telephone is configured, when it allows relative movement of the two housing members 101, 103, to actuate an angle position detector 124. The detector 124 is connected to the processing unit 110 and is thereby capable of conveying information regarding the relative position of the two body parts 101, 103. The detector 124 is adapted to detect an angle position between the first and second housing members 101, 103 and supply an angle position detection signal to the central processing unit 107, which operates as controller operable in a plurality of operation states. The term angle position is intended to indicate the relative position of the first and second members during operation of the telephone 100. Thus, an angle α is used in the description below for illustrative purposes, but the value of the angle α itself is not crucial for the invention. However, the relations between different angles and angle positions are considered in the present invention. The controller is adapted to enter one of a plurality of operating states when the angle position detection signal represents an angle position within one of a plurality of intervals, respectively. A more detailed description of the controller, the detector 124 and the angle position detecting function described above will be discussed in more detail below in connection with figures 2 to 6.

It is to be noted that the different blocks that have been described above are functional blocks and do not necessarily correspond to actual hardware units in a one-to-one relationship. As the skilled person will realize, functionality comprised in the blocks of figure 1 may, wholly or in part, be comprised in one or more integrated circuits in the form of any mixture of programmable and non-programmable circuits.

Figs 2a to 2f show a communication apparatus 1 provided with a first housing member 3 and a second housing member 5. The first housing member 3 and the second housing member are arranged with a hinge 6, such that the housing members 3, 5 are able to pivot around an axis A-A of the hinge 6 in Fig. 2a. The communication apparatus is folded-up, when the housing members 3, 5 are parallel and abut on each other, as shown in Fig. 2a.

Fig. 2b shows the unfolded communication apparatus 1 provided with the first housing member 3 and the second housing member 5. The communication apparatus 1 is further provided with a keypad 7 and a display 9.

Fig. 2c shows the communication apparatus 1 having an angle position α related to the first housing member 3 and the second housing member 5. A detector of the kind discussed above in connection with Fig. 1 is provided within the apparatus to detect the angle position α between the first housing member 3 and the second housing member 5. Fig. 2c shows the communication apparatus 1 when the housing members are almost entirely folded up, or just about to be unfolded, thus the angle α is small. Thus, the angle α of the communication apparatus 1 as shown in Fig. 2a is zero (α=0), and the angle α of the communication apparatus 1 as shown in Fig. 2b is about 180 degrees, since the housing members 3, 5 are about anti-parallel.

Consider a first state of the communication apparatus 1 where the housing members 3, 5 are folded up (Fig. 2a, α=0). In such a state, the display and keypad are inaccessible to a user. Normally, to save power and increase stand-by time, backlight of the display 9 and keypad 7 is turned off. Further, since the display 9 consumes a non-negligible amount of power, it is advantageous to turn that off too, since it cannot be seen by the user anyway. Further power saving measures relating to inaccessible functions are also possible, e.g. scanning of the keypad 7. However, when a user wants to use the communication apparatus 1, a natural action to perform is to unfold the housing members 3, 5 of the communication apparatus 1, and thereby enabling access to the keypad 7 or the display 9. Therefore, a second state is entered as the angle α between the housing members 3, 5 becomes more than a threshold angle α_{T12}. The threshold angle α_{T12} is preferably between 5 and 55 degrees, more preferably between 10 and 50 degrees. A preferred threshold angle α_{T12} is 45 degrees, thus minimizing the risk of unintentional toggling between the first and second state due to slipping when unfolding the communication apparatus 1. The state may involve turning on backlight, display, keypad scanning etc. It shall be noted that determination of an angle α above the threshold angle α_{T12} is implemented by a controller connected to the detector, which preferably is an electromechanical switch detecting the angle position at e.g. the hinge 6. The controller is preferably implemented by the central processing 110 unit shown in Fig. 1. Alternatively, the detector is implemented by a hall sensor in one of the housing members detect that a magnet in the other housing member becomes more distant as the communication apparatus unfolds. Preferably, the detector is implemented by one or more cams arranged at or close to the hinge, and adapted to move in relation to one of the housing members, and one or more electromechanical switches fixed in relation to the other housing member. The one or more cams are adapted to actuate the one or more electromechanical switches to generate said angle position detection signal, thereby directly representing the angle position interval.

An alternative to the embodiment using a detector is to measure or estimate the angle α at the hinge 6 using an angle sensor, e.g. an optical angle encoder or a magnetic angle encoder, schematically illustrated by the detector 124 in Fig. 1.

As the housing members 3, 5 unfold more, the communication apparatus 1 remain in the second state, and the housing members 3, 5 are at an angle α₁ relative to each other that allow access to the keypad 7 and display 9, as illustrated in Fig. 2d. As the housing members 3, 5 unfold even more, as illustrated in Fig. 2e, the angle, or angle position, is determined by the angle encoder, or detector, and controller to exceed another threshold angle α_{T23}, and the communication apparatus 1 enters a third state, in which the housing members 3, 5 extend from each other in a manner which is suitable for phone conversation or access to other telecommunication services.

Further functions are preferably activated when entering a third state, e.g. voice control functions or a touch screen function. The threshold α_{T23} is preferably between 100 and 170 degrees, more preferably between 120 and 150 degrees. A preferred threshold α_{T23} is 135 degrees. Therefore, the third state of the communication apparatus 1 remains when the housing members 3, 5 are substantially unfolded, as illustrated in Fig. 2b and 2f.

Messaging functions, such as Short Message Service (SMS), Multimedia Messaging Service (MMS), and e-mail service, is preferably activated upon transition of operating states in such a manner that information of a received message (SMS, MMS or e-mail) is presented on the display upon transition from the first state to the second state, and the message itself is then presented upon transition from the second to the third state.

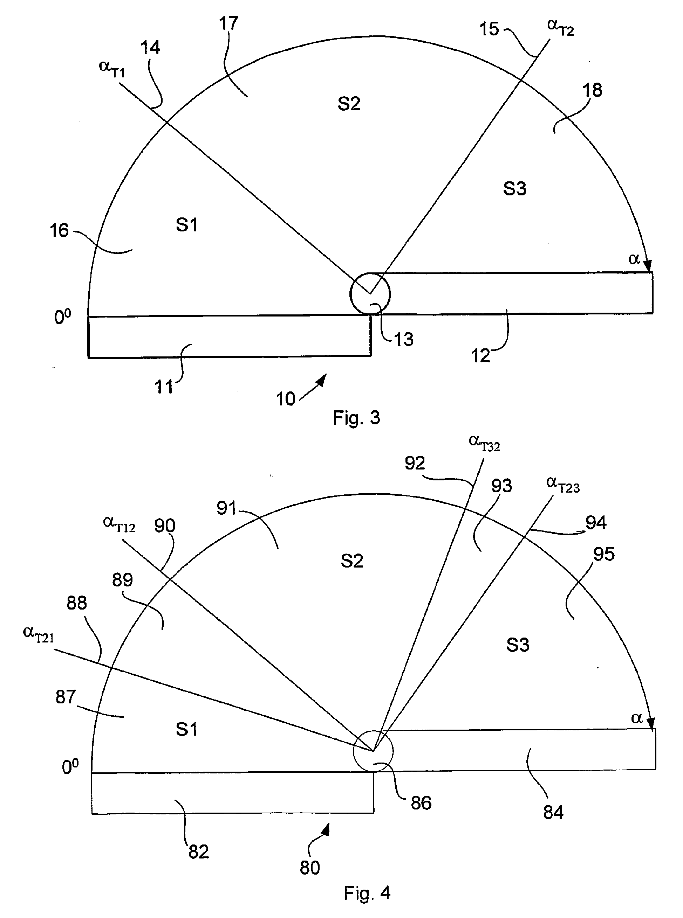

Fig. 3 shows an angle position diagram in relation to a communication apparatus 10 according to an embodiment of the present invention comprising a first housing member 11, a second housing member 12. The first and second housing members 11, 12 are pivotally coupled to each other by a hinge 13 such that the first and second housing members 11, 12 can be oriented in different angle positions α in relation to each other. The possible angle positions are divided by threshold angle positions α_{T1} 14 and α_{T2} 15 into angle position intervals 16, 17, 18. A detector (not shown in Fig. 3) generates an angle position detection signal indicating a current angle position interval 16, 17 or 18, which implies a controller to enter a corresponding operating state S1, S2 or S3.

Fig. 4 shows an angle position diagram in relation to a communication apparatus 80 according to further an embodiment of the present invention, comprising a first housing member 82, a second housing member 84. The first and second housing members 82, 84 are pivotally coupled to each other by a hinge 86 such that the first and second housing members 82, 84 can be oriented in different angle positions α in relation to each other. The possible angle positions are divided by threshold angle positions α_{T21} 88, α_{T12} 14, α_{T32} 92 and α_{T23} 94 into angle position intervals 87, 89, 91, 93, 95. A detector (not shown in Fig. 4) generates an angle position detection signal indicating a current angle position interval 87, 89, 91, 93, 95, which implies a controller to enter a corresponding operating state S1, S2 or S3. Consider the communication apparatus 80 being in the first operating state S1. As long as the detector indicates that the angle position α is within angle position intervals 87 or 89, the communication apparatus 80 remain in the first operating state S1, but if the detector indicate that α>α_{T12}, i.e. the angle position α is within the angle position interval 91, the second operating state S2 is entered. As long as the detector indicates that the angle position α is within angle position intervals 91 or 93, the communication apparatus 80 remain in the second operating state S2, but if the detector indicate that α>α_{T23}, i.e. the angle position α is within the angle position interval 95, the third operating state S3 is entered. If the detector indicate that α<α_{T21}, i.e. the angle position α is within the angle position interval 89, the first operating state S1 is entered. If the communication apparatus 80 is in the third operating state S3, and the detector indicate that α<α_{T32}, i.e. the angle position α is within the angle position interval 91, the second operating state S2 is entered. A small hysteresis is thus provided. The threshold angle position α_{T21} 88 is set slightly smaller than α_{T12} 90 to avoid unnecessary toggling between the first and second states in case of the angle position a between the housing members are close to the angle position interval boundary. Similarly, the threshold angle position α_{T32} 92 is slightly smaller than α_{T23} 94.

Preferably, the detector is implemented by one or more cams at or close to the hinge, and one or more electromechanical switches. The one or more cams are adapted to actuate the one or more electromechanical switches to generate said angle position detection signal, thereby directly representing the angle position interval. The hysteresis is simply implemented by the dimensions of the one or more cams actuating the one or more electromechanical switches. Thus, a communication apparatus 80 and an intuitively related manner of operating the apparatus are provided, which will improve user-friendliness.

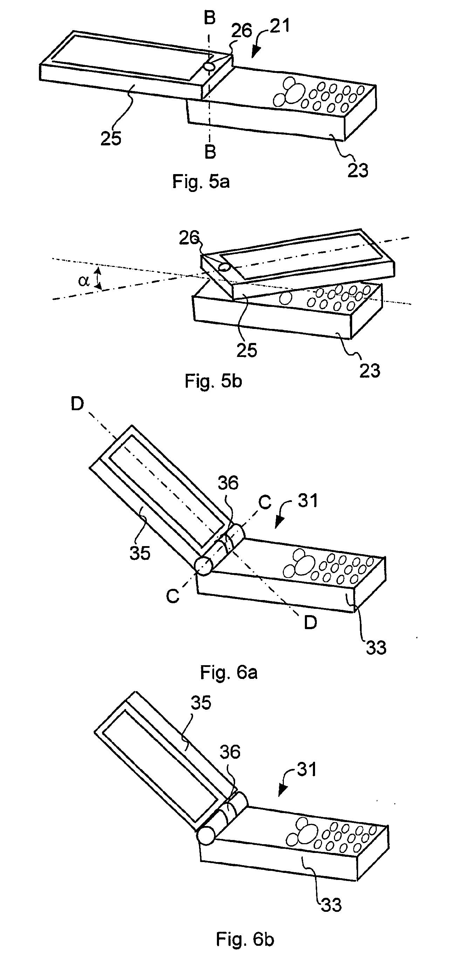

Figs 5a and 5b show a communication apparatus 21 according to a second embodiment provided with a first housing member 23 and a second housing member 25. The first housing member 23 and the second housing member 25 are arranged with a hinge 26, such that the housing members 23, 25 are able to pivot around an axis B-B of the hinge 26. Fig. 5b shows the communication apparatus 21 according to the second embodiment when the housing members are almost entirely folded up, or just about to be unfolded, thus the angle α is small. The angle α between the housing members of the communication apparatus 21 as shown in Fig. 5a is thus about 180 degrees, since the housing members 23, 25 are substantially anti-parallel.

Figs 6a and 6b show a communication apparatus 31 according to a third embodiment provided with a first housing member 33 and a second housing member 35. The first housing member 33 and the second housing member are arranged with a two-axes hinge 36, such that the housing members 33, 35 both are able to pivot around an axes C-C and D-D of the two-axes hinge 36. Fig. 6b shows the communication apparatus 31 according to the third embodiment when the housing members 33, 35 are pivoted around axis D-D.

Detection, measurement, or estimation of the angle position is performed in a similar manner as in previous embodiments.

In other aspects, the operation and implementation of the second and third embodiments are similar to those of the first embodiment.

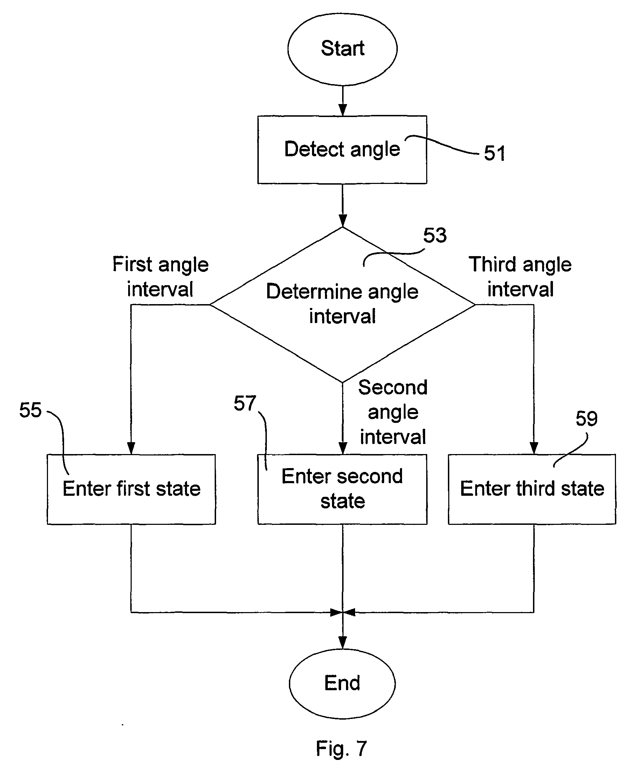

Fig. 7 is a flow chart showing a method of operating a communication apparatus according to above embodiments. An angle position between the first and second housing members is detected in a detection step 51. Thereafter, it is determined in a determination step 53 in which interval the angle position belongs. A first, second or third state is entered in an entering step 55, 57, 59, respectively, in relation to the determination step 53. Although the preferred embodiment relates to three states and three angle position intervals it is possible to have four or more angle position intervals and states.

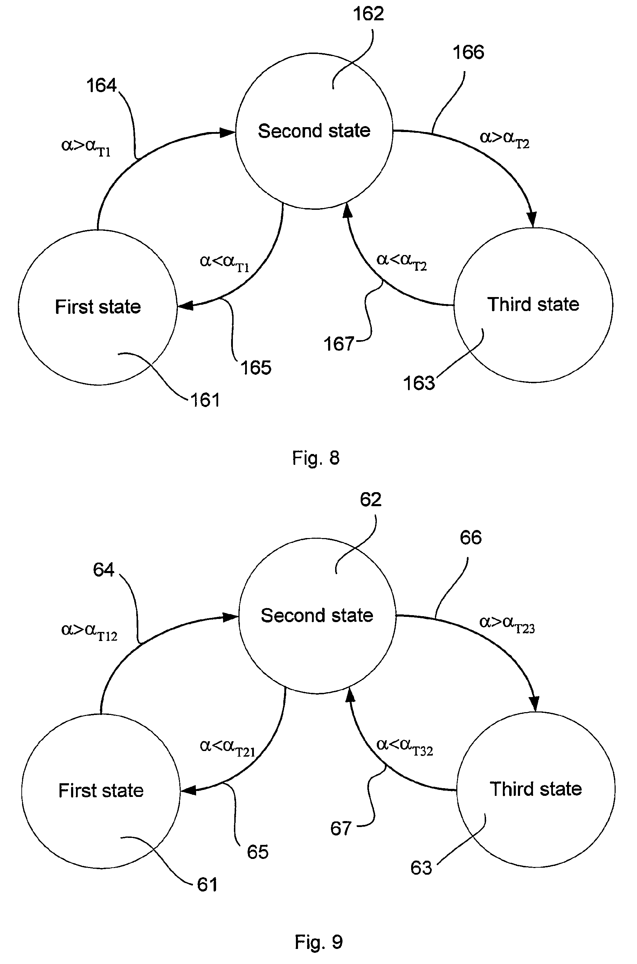

Fig. 8 is a state transition diagram of an embodiment of the present invention showing three states 161, 162, 163 and state transitions 164, 165, 166, 167. At each state transition 164, 165, 166, 167, the cause of the state transition is denoted, i.e. angle position comparison with angle position thresholds or detection of angle position interval. When the existing state is the first state 161, transition 164 to the second state 162 is caused when α>α_{T1}. When the existing state is the second state 162, transition 165 to the first state 161 is caused when α<α_{T1}, or transition 166 to the third state 163 is caused when α>α_{T2}. When the existing state is the third state 163, transition 167 to the second state 162 is caused when α<α_{T2}.

Fig. 9 is a state transition diagram of further an embodiment of the present invention showing three states 61, 62, 63 and state transitions 64, 65, 66, 67. At each state transition 64, 65, 66, 67, the cause of the state transition is denoted, i.e. angle position comparison with angle position thresholds, or detection of angle position interval, preferably implemented by one or more cams at or close to the hinge, and one or more electromechanical switches. The one or more cams are adapted to actuate the one or more electromechanical switches to generate said angle position detection signal, thereby directly representing the angle position interval.

When the existing state is the first state 61, transition 64 to the second state 62 is caused when α>α_{T12}. When the existing state is the second state 62, transition 65 to the first state 61 is caused when α<α_{T21}, or transition 66 to the third state 63 is caused when α>α_{T23}. When the existing state is the third state 63, transition 67 to the second state 62 is caused when α<α_{T32}.

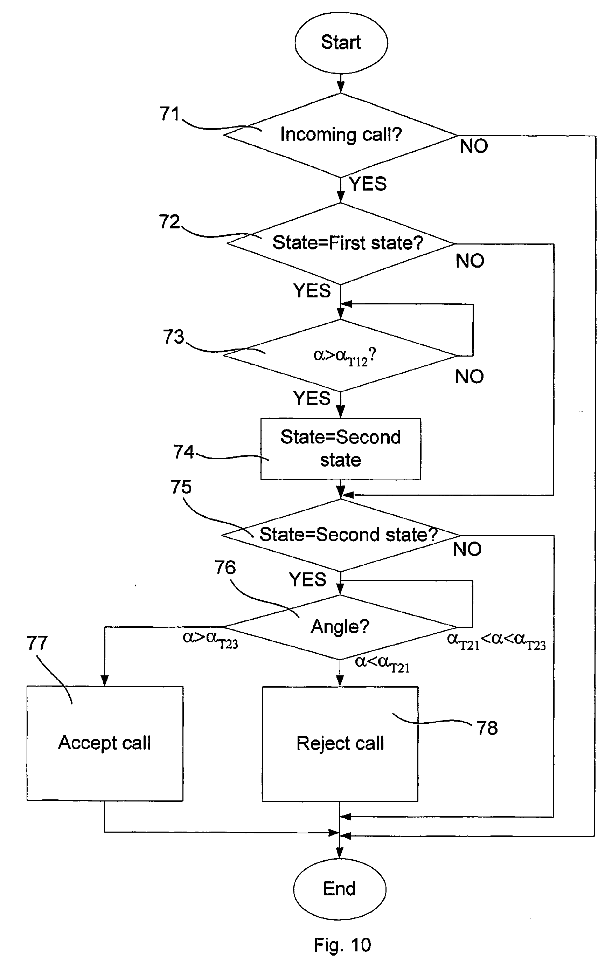

Fig. 10 is a flow chart showing an illustrative example of a situation when the method and apparatus of the present invention provide an intuitive and user-friendly operation of the communication apparatus, preferably a mobile phone handset. In an incoming call step 71, a call comes in. The calling phone number is normally displayed on the display, or the name of the person calling if the received phone number is an item in the phone book of the communication apparatus. In a status check step 72, the communication apparatus checks if the existing state is the first state. If the existing state is any other state than the first state, the method continues to a second status check step 75. If the existing state is the first state, the method continues with an angle position comparison step 73. As long as the angle position α is less than the threshold angle position α_{T12} the comparison step 73 is repeated. Since the communication apparatus is folded up, the display is inaccessible. When the angle position α becomes larger than the threshold angle position α_{T12}, the method continues with a state entering step 74, i.e. the user unfolds the communication apparatus, and the second state is thus entered. The user is then able to read the name or phone number in the display and decide whether to accept, or reject, the call. The method continues with the second status check step 75. If the state any other than the second state, the method ends. If the state is the second state, the method continues with an angle position determination step 76. The angle position determination step 76 is repeated as long as the angle α is less than the threshold angle α_{T23} and more than the threshold angle α_{T21}. If the angle α is detected to be larger than the threshold angle α_{T23}, the method continues with a call acceptance step 77, where the call is caused to be accepted by the controller, i.e. the user is able to completely unfold the communication apparatus, and the third state is entered, to accept the incoming call. If the angle α is detected to be less than the threshold angle α_{T21}, the method continues with a call rejection step 78, where the call is caused to be rejected by the controller, i.e. the user is able to fold up the communication apparatus, and the first state will be reentered, to reject the incoming call. As long as the communication apparatus remains in the second state, the call is neither accepted, nor rejected, thus providing the user time to decide whether to accept or reject the call. A preferred feature related to incoming calls is that the buzzer turns off as the communication apparatus enters the second state, to avoid annoying sound while deciding whether to accept or reject the incoming call. Alternatively, the buzzer turns off in step 78 instead of rejecting the call.

## Claims

1. A communication apparatus (1, 10, 21, 31, 80, 100) having
a first housing member (3, 11, 23, 33, 82, 101),
a second housing member (5, 12, 25, 35, 84, 103) pivotally coupled to said first housing member,
a controller (110) operable in a plurality of operation states (61, 62, 63, 161, 162, 163), and
a detector (124) associated with said first and second housing members, and connected to said controller,
said detector being adapted to detect an angle position related to said first and second housing members and supply an angle position detection signal to said controller, and
said controller being adapted to enter a first operating state (61, 161) when said angle position detection signal represents an angle position within a first interval (16, 87, 89), a second operating state (62, 162) when said angle position detection signal represents an angle position within a second interval (17, 89, 91, 93), and a third operating state (63, 163) when said angle position detection signal represents an angle position within a third interval (18, 93, 95), wherein said controller is further adapted to control reception of an incoming call by rejecting said incoming call upon a transition from said second state to said first state, or accepting said incoming call upon a transition from said second state to said third state, **characterised by** the first operating state being entered where said angle position is less than a first threshold angle position (88), the second operating state being entered where said angle position is more than a second angle threshold position (90) or less than a third angle threshold position (92), and the third operating state being entered where said angle position is more than a fourth angle threshold position. (94), and wherein said first angle threshold position threshold represents a smaller angle than said second angle threshold position, and said third angle threshold position represents a smaller angle than said fourth angle threshold position.

2. The communication apparatus of claim 1, wherein the detector (124) comprises a means provided with one or more cams and one or more electromechanical switches, said cams being adapted to actuate said one or more electromechanical switches to generate said angle position detection signal directly representing said angle position interval.

3. The communication apparatus of claim 1 or 2, wherein said controller, (110) is adapted to accept said incoming call upon said transition from said second state to said third state after a transition from said first state to said second state, wherein said controller is adapted to provide caller information when in said second state.

4. The communication apparatus according to any of the preceding claims, wherein said first state is a state in which said first and second housing members are essentially folded up.

5. The communication apparatus according to any of the preceding claims, wherein said detector (124) comprises a hall sensor.

6. The communication apparatus according to any of claims 1 to 5, wherein said detector (124) comprises an electromechanical switch.

7. A method for operating a communication apparatus (1, 10, 21, 31, 80, 100) having a first housing member (3, 11, 23, 33, 82, 101) and a second housing member (5, 12, 25, 35, 84, 103) pivotally coupled to said first housing member, said method comprising
detecting (51) an angle position related to said first and second housing members;
entering (55, 57, 59) a first (61, 161), second (62, 162) and third (63, 163) state of said communication apparatus related to a first (16, 87, 89), second (17, 89, 91, 93), and third (18, 93, 95) interval of said angle position respectively;
receiving (71) a phone call, comprising the substeps of
unfolding said communication apparatus from said first state to said second state;
displaying caller information; and
rejecting (78) said phone call by folding said communication apparatus to said first state; or
accepting (77) said phone call by further unfolding said communication apparatus to said third state, **characterised by** the entering of the first operating state when said angle position is less than a first threshold angle position (88), the entering of the second operating state when said angle position is more than a second angle threshold position (90) or less than a third angle threshold position (92), and the entering of the third operating state when said angle position is more than a fourth angle threshold position (94), and wherein said first angle threshold position threshold represents a smaller angle than said second angle threshold position, and said third angle threshold position represents a smaller angle than said fourth angle threshold position.

8. The method of claim 7, wherein said detection comprises
actuating a electromechanical switch by a cam; and generating an angle position signal by said electromechanical switch.

9. The method according to claim 7 or 8, comprising accepting an incoming call (77) upon said transition from said second state to said third state after a transition from said first state to said second state.

10. The method according to any of claims 7-9, comprising activating a display, (107) upon transition from said first state to said second state.

11. The method according to any of claims 7-10, comprising scanning of a touch screen when said communication apparatus is in said third state.

12. The method according to any of claims 7-11, comprising activating presentation of information of a new message on a display (107) upon transition from said first state to said second state.

13. The method of claim 12, comprising activating presentation of the message upon transition from said second state to said third state.

14. The method according to any of claims 7-12, comprising activating presentation of information of an incoming call on a display (107) upon transition from said first state to said second state.

15. The method according to any of claims 7-14, comprising deactivating a display (107) upon transition from said second state to said first state.

## Patentansprüche

1. Kommunikationsvorrichtung (1, 10, 21, 31, 80, 100), umfassend:
ein erstes Gehäuseteil (3, 11, 23, 33, 82, 101),
ein zweites Gehäuseteil (5, 12, 25, 35, 84, 103), das schwenkbar mit dem ersten Gehäuseteil gekoppelt ist,
einen Controller (110), der in einer Mehrzahl von Betriebszuständen (61, 62, 63, 161, 162, 163) betreibbar ist, und
einen Detektor (124), der dem ersten und dem zweiten Gehäuseteil zugeordnet ist und mit dem Controller verbunden ist,
wobei der Detektor ausgestaltet ist, eine Winkelposition, die sich auf das erste und das zweite Gehäuseteil bezieht, zu erfassen und ein Winkelpositionserfassungssignal an den Controller zu liefern, und
wobei der Controller ausgestaltet ist, in einen ersten Betriebszustand (61, 161) einzutreten, wenn das Winkelpositionserfassungssignal eine Winkelposition in einem ersten Intervall (16, 87, 89) darstellt, in einen zweiten Betriebszustand (62, 162), wenn das Winkelpositionserfassungssignal eine Winkelposition in einem zweiten Intervall (17, 89, 91, 93) darstellt, und in einen dritten Betriebszustand (63, 163), wenn das Winkelpositionserfassungssignal eine Winkelposition in einem dritten Intervall (18, 93, 95) darstellt, wobei der Controller des weiteren ausgestaltet ist, einen Empfang eines eingehenden Anrufs zu steuern, indem er den eingehenden Anruf aufgrund eines Übergangs vom zweiten Zustand in den ersten Zustand zurückweist oder den eingehenden Anruf aufgrund eines Übergangs vom zweiten Zustand in den dritten Zustand annimmt, **dadurch gekennzeichnet, dass** der erste Betriebszustand eintritt, wenn die Winkelposition weniger als eine erste Winkelschwellwertposition (88) ist, der zweite Betriebszustand eintritt, wenn die Winkelposition über einer zweiten Winkelschwellwertposition (90) oder unter einer dritten Winkelschwellwertposition (92) liegt, und der dritte Betriebszustand eintritt, wenn die Winkelposition über einer vierten Winkelschwellwertposition (94) liegt, und wobei die erste Winkelschwellwertposition einen kleineren Winkel als die zweite Winkelschwellwertposition darstellt und die dritte Winkelschwellwertposition einen kleineren Winkel als die vierte Winkelschwellwertposition darstellt.

2. Kommunikationsvorrichtung nach Anspruch 1, bei welcher der Detektor (124) ein Mittel umfasst, das mit einer oder mehr Steuerkurven und einem oder mehr elektromechanischen Schaltern ausgestattet ist, wobei die Steuerkurven ausgestaltet sind, den einen oder mehr elektromechanische Schalter zu betätigen, um das Winkelpositionserfassungssignal zu erzeugen, das direkt das Winkelpositionsintervall darstellt.

3. Kommunikationsvorrichtung nach einem der Ansprüche 1 oder 2, bei welcher der Controller (110) ausgestaltet ist, den eingehenden Anruf aufgrund des Übergangs vom zweiten Zustand in den dritten Zustand nach einem Übergang vom ersten Zustand in den zweiten Zustand anzunehmen, wobei der Controller ausgestaltet ist, eine Anruferinformation bereitzustellen, wenn er im zweiten Zustand ist.

4. Kommunikationsvorrichtung nach einem der vorstehenden Ansprüche, bei welcher der erste Zustand ein Zustand ist, in welchem das erste und das zweite Gehäuseteil im Wesentlichen zusammengelegt sind.

5. Kommunikationsvorrichtung nach einem der vorstehenden Ansprüche, bei welcher der Detektor (124) einen Hallsensor umfasst.

6. Kommunikationsvorrichtung nach einem der Ansprüche 1 bis 5, bei welcher der Detektor (124) einen elektromechanischen Schalter umfasst.

7. Verfahren zum Betreiben einer Kommunikationsvorrichtung (1, 10, 21, 31, 80, 100) mit einem ersten Gehäuseteil (3, 11, 23, 33, 82, 101) und einem zweiten Gehäuseteil (5, 12, 25, 35, 84, 103), das schwenkbar mit dem ersten Gehäuseteil gekoppelt ist, wobei das Verfahren umfasst:
Erfassen (51) einer Winkelposition, die sich auf das erste und das zweite Gehäuseteil bezieht;
Eintreten (55, 57, 59) eines ersten (61, 161), zweiten (62, 162) und dritten (63, 163) Zustands der Kommunikationsvorrichtung, die sich jeweils auf ein erstes (16, 87, 89), zweites (17, 89, 91, 93) und drittes (18, 93, 95) Intervall der Winkelposition beziehen;
Empfangen (71) eines Anrufs, umfassend die Unterschritte:
Auseinanderklappen der Kommunikationsvorrichtung vom ersten Zustand in den zweiten Zustand;
Anzeigen einer Anruferinformation; und
Zurückweisen (78) des Anrufs durch Klappen der Kommunikationsvorrichtung in den ersten Zustand; oder
Annehmen (77) des Anrufs durch Weiteraufklappen der Kommunikationsvorrichtung in den dritten Zustand, **gekennzeichnet durch** das Eintreten des ersten Betriebszustands, wenn die Winkelposition weniger als eine erste Schwellwertwinkelposition (88) ist, das Eintreten des zweiten Betriebszustands, wenn die Winkelposition mehr als eine zweite Winkelschwellwertposition (90) oder weniger als eine dritte Winkelschwellwertposition (92) ist, und das Eintreten des dritten Betriebszustands, wenn die Winkelposition mehr als eine vierte Winkelschwellwertposition (94) ist, und wobei die erste Winkelschwellwertposition einen kleineren Winkel als die zweite Winkelschwellwertposition darstellt, und die dritte Winkelschwellwertposition einen kleineren Winkel als die vierte Winkelschwellwertposition darstellt.

8. Verfahren nach Anspruch 7, bei welchem die Erfassung umfasst:
Betätigen eines elektromechanischen Schalters durch eine Steuerkurve; und
Erzeugen eines Winkelpositionssignals durch den elektromechanischen Schalter.

9. Verfahren nach einem der Ansprüche 7 oder 8, umfassend Annehmen eines eingehenden Anrufs (77) aufgrund des Übergangs vom zweiten Zustand in den dritten Zustand nach einem Übergang vom ersten Zustand in den zweiten Zustand.

10. Verfahren nach einem der Ansprüche 7 bis 9, umfassend Aktivieren einer Anzeige (107) aufgrund eines Übergangs vom ersten Zustand in den zweiten Zustand.

11. Verfahren nach einem der Ansprüche 7 bis 10, umfassend Abtasten eines Touchscreens, wenn die Kommunikationsvorrichtung im dritten Zustand ist.

12. Verfahren nach einem der Ansprüche 7 bis 11, umfassend Aktivieren einer Darstellung einer Information einer neuen Nachricht auf einer Anzeige (107) aufgrund eines Übergangs vom ersten Zustand in den zweiten Zustand.

13. Verfahren nach Anspruch 12, umfassend Aktivieren einer Darstellung der Nachricht aufgrund eines Übergangs vom zweiten Zustand in den dritten Zustand.

14. Verfahren nach einem der Ansprüche 7 bis 12, umfassend Aktivieren einer Darstellung einer Information eines eingehenden Anrufs auf einer Anzeige (107) aufgrund eines Übergangs vom ersten Zustand in den zweiten Zustand.

15. Verfahren nach einem der Ansprüche 7 bis 14, umfassend Deaktivieren einer Anzeige (107) aufgrund eines Übergangs vom zweiten Zustand in den ersten Zustand.

## Revendications

1. Appareil de communication (1, 10, 21, 31, 80, 100) ayant
- un premier boîtier (3, 11, 23, 33, 82, 101),
- un deuxième boîtier (5, 12, 25, 35, 84, 103) couplé de façon pivotante audit premier boîtier,
- un contrôleur (110) fonctionnant selon plusieurs états opérationnels (61, 62, 63, 161, 162, 163), et
- un détecteur (124) associé auxdits premier et deuxième boîtiers, et connecté audit contrôleur,
ledit détecteur étant adapté pour détecter une position angulaire relative desdits premier et deuxième boîtiers et pour fournir un signal de détection de la position angulaire audit contrôleur, et
ledit contrôleur étant configuré pour entrer dans un premier état opérationnel (61, 161) lorsque ledit signal de détection de position angulaire représente un angle de position compris dans un premier intervalle (16, 87, 89),
un second état opérationnel (62, 162) lorsque ledit signal de détection de position angulaire représente un angle de position compris dans un second intervalle (17, 89, 91, 93), et
un troisième état opérationnel (63, 163) lorsque ledit signal de détection de position angulaire représente un angle de position compris dans un troisième intervalle (18, 93, 95)
dans lequel ledit contrôleur est en outre adapté pour
contrôler la réception d'un appel entrant en rejetant ledit appel entrant après une transition dudit second état opérationnel audit premier état, ou
accepter ledit appel entrant après une transition dudit second état opérationnel audit troisième état,
**caractérisé en ce que**
on entre dans le premier état opérationnel quand ledit angle de position est inférieur à un premier seuil d'angle de position (88), on entre dans le second état opérationnel quand ledit angle de position est supérieur à un second seuil d'angle de position (90), ou inférieur à un troisième seuil d'angle de position (92), et on entre dans le troisième état opérationnel quand ledit angle de position est supérieur à un quatrième seuil d'angle de position (94), et
dans lequel ledit premier seuil d'angle de position représente un angle plus petit que ledit second seuil d'angle de position, et ledit troisième seuil d'angle de position représente un angle plus petit que ledit quatrième seuil d'angle de position.

2. Appareil de communication selon la revendication 1, dans lequel le détecteur (124) comprend un moyen fourni avec une ou plusieurs cames et un ou plusieurs commutateurs électromécaniques,
lesdites cames étant adaptées pour actionner ledit un ou plusieurs commutateurs électromécaniques pour générer ledit signal de détection de l'angle de position représentant directement ledit intervalle d'angle de position.

3. Appareil de communication de la revendication 1 ou 2, dans lequel ledit contrôleur (110) est adapté pour accepter ledit appel entrant au cours dudit passage dudit second état audit troisième état après un passage dudit premier état audit second état, dans lequel ledit contrôleur est adapté pour fournir des informations sur un appelant quand il est dans ledit second état.

4. Appareil de communication selon l'une quelconque des précédentes revendications, dans lequel ledit premier état est un état dans lequel lesdits premier et second boîtiers sont essentiellement repliés.

5. Appareil de communication selon l'une quelconque des revendications précédentes, dans lequel ledit détecteur (124) comprend un capteur à effet hall.

6. Appareil de communication selon l'une quelconque des revendications 1 à 5, dans lequel ledit détecteur (124) comporte un commutateur électromécanique.

7. Procédé pour la mise en oeuvre d'un appareil de communication (1, 10, 21, 31, 80, 100) ayant
un premier boîtier (3, 11, 23, 33, 82, 101), et
un deuxième boîtier (5, 12, 25, 35, 84, 103) couplé de façon pivotante audit premier boîtier, ledit procédé comprenant les étapes consistant à :
détecter (51) un angle de position lié auxdits premier et second boîtiers ;
passer (55, 57, 59) à un premier (61, 161), second (62, 162) et troisième (63, 163) état dudit appareil de communication respectivement relatifs à un premier (16, 87, 89), second (17, 89, 91, 93) et troisième (18, 93, 95) intervalle dudit angle de position ;
récevoir (71) un appel téléphonique, comprenant les sous-étapes consistant à :
déplier ledit appareil de communication dudit premier état audit second état ;
afficher des informations concernant l'appelant ; et
rejeter (78) ledit appel téléphonique en pliant ledit appareil dans le premier état ; ou
accepter (77) ledit appel téléphonique en dépliant ledit appareil dans ledit troisième état,
**caractérisé par** le passage audit premier état opérationnel lorsque ledit angle position est inférieur à un premier seuil d'angle de position (88), le passage audit second état opérationnel lorsque ledit angle de position est supérieur à un second seuil d'angle position (90), ou inférieur à un troisième seuil d'angle de position (92), et le passage audit troisième état opérationnel lorsque ledit angle de position est supérieur à un quatrième seuil d'angle de position (94), et dans lequel ledit premier seuil d'angle de position représente un angle plus petit que ledit second seuil d'angle de position, et ledit troisième angle de position représente un plus angle petit que le quatrième seuil d'angle de position.

8. Procédé selon la revendication 7, dans lequel ladite détection comprend l'actionnement d'un commutateur électromécanique par une came, et la génération d'un signal d'angle de position par ledit commutateur électromécanique.

9. Procédé selon l'une quelconque des revendications 7 ou 8, comprenant l'acceptation d'un appel entrant (77) au cours dudit passage dudit second état audit troisième état après passage du premier état audit second état.

10. Procédé selon l'une quelconque des revendications 7 à 9, comprenant l'activation d'un affichage (77) au cours dudit passage du premier état audit second état.

11. Procédé selon l'une quelconque des revendications 7 à 10, comprenant le balayage d'un écran tactile lorsque ledit appareil de communication est dans ledit troisième état.

12. Procédé selon l'une quelconque des revendications 7 à 11, comprenant l'activation de la présentation d'informations sur un nouveau message sur un écran (107) au cours du passage dudit premier état audit second état.

13. Procédé de la revendication 12, comprenant l'activation de la présentation du message au cours du passage dudit second état audit troisième état.

14. Procédé selon l'une quelconque des revendications 7 à 12, comprenant l'activation de la présentation d'informations sur un appel entrant sur un écran (107) au cours du passage dudit premier état audit second état.

15. Procédé selon l'une quelconque des revendication 7 à 14, comprenant la désactivation d'un écran (107) au cours du passage dudit second état audit premier état.
